# EUROPÄISCHE PATENTSCHRIFT

(11) **EP 3 105 898 B1**
(45) Veröffentlichungstag und Bekanntmachung des Hinweises auf die Patenterteilung: **13.06.2018**
(21) Anmeldenummer: 15702709.5
(22) Anmeldetag: 27.01.2015
(51) Int. Cl.: H04L 29/06, G06F 21/62

(54) **VERFAHREN ZUR KOMMUNIKATION ZWISCHEN ABGESICHERTEN COMPUTERSYSTEMEN SOWIE COMPUTERNETZ-INFRASTRUKTUR**
METHOD FOR COMMUNICATION BETWEEN SECURED COMPUTER SYSTEMS AS WELL AS COMPUTER NETWORK INFRASTRUCTURE
PROCÉDÉ DE COMMUNICATION ENTRE DES SYSTÈMES INFORMATIQUES SÉCURISÉS ET INFRASTRUCTURE DE RÉSEAU INFORMATIQUE

(30) Priorität: 13.02.2014 DE 102014101835
(43) Veröffentlichungstag der Anmeldung: 21.12.2016
(73) Patentinhaber: Fujitsu Technology Solutions Intellectual Property GmbH, 80807 München (DE)
(72) Erfinder: CLAES, Heinz-Josef, 61130 Nidderau (DE)
(74) Vertreter: Epping - Hermann - Fischer
(86) Internationale Anmeldenummer: PCT/EP2015/051600
(87) Internationale Veröffentlichungsnummer: WO 2015/121060

(56) Entgegenhaltungen:
- EP-A1- 2 772 856
- US-A1- 2009 183 234
- Barry Rhodes ET AL: "On Securing the Public Health Information Network Messaging System", Proceedings of the 4th Annual PKI R&D Workshop "Multiple Paths to Trust", August 2005 (2005-08), Seiten 194-201, XP055191980, ISBN: 978-1-88-684338-7 Gefunden im Internet: URL:http://csrc.nist.gov/publications/nist ir/ir7224/NISTIR-7224.pdf [gefunden am 2015-05-28]
- GREEN M L ET AL: "Grid-Enabled Virtual Organization Based Dynamic Firewall", GRID COMPUTING, 2004. PROCEEDINGS. FIFTH IEEE/ACM INTERNATIONAL WORKSH OP ON PITTSBURGH, PA, USA 08-08 NOV. 2004, PISCATAWAY, NJ, USA,IEEE, 8. November 2004 (2004-11-08), Seiten 208-216, XP010769500, DOI: 10.1109/GRID.2004.35 ISBN: 978-0-7695-2256-2

## Beschreibung

Die Erfindung betrifft ein Verfahren zur Kommunikation zwischen abgesicherten Computersystemen sowie eine Computernetz-Infrastruktur umfassend mehrere vernetzte Computersysteme.

Verteilte Rechnernetze beziehungsweise sogenannte Computernetz-Infrastrukturen beschreiben eine Mehrzahl von Computersystemen, die über Datenverbindungen miteinander kommunizieren können. Dabei werden zum Teil vertrauliche Inhalte ausgetauscht, auf die nicht-autorisierte Personen keine Zugriffsmöglichkeit haben sollen. Insbesondere in Computernetz-Infrastrukturen, welche Server-Client-Topologien umfassen, werden vertrauliche Daten, zum Beispiel Kundendaten oder Benutzerdaten, zwischen dem Client und dem Server ausgetauscht, wobei ein Zugriff Dritter auf diese Daten unterbunden werden muss.

Herkömmliche Sicherheitsstrategien zur Erhöhung des Datenschutzes umfassen einerseits Vorschriften (Prozesse, die eingehalten werden sollen) sowie Regeln (Gebote beziehungsweise Verbote) für dritte Personen, beispielsweise Administratoren, wodurch nur ein eingeschränkter beziehungsweise kontrollierter Zugriff auf vertrauliche Daten möglich sein soll. Insbesondere wird ein Zugriff auf vertrauliche Daten in einem Computersystem durch vordefinierte Zugriffsrechte (Login-Rechte oder Benutzerrechte) eingeschränkt, sodass nur (vertrauenswürdige) Personen Zugriff auf die vertraulichen Daten haben, welche über die entsprechenden Rechte verfügen.

Andererseits sind technische Maßnahmen an beziehungsweise in den Computersystemen vorgesehen, welche einen physischen und/oder logischen Zugriff auf Computersysteme verhindern beziehungsweise auf autorisierte Personen einschränken soll. Derartige Ansätze zur Verbesserung des Datenschutzes sind zur Datensicherheit zwar förderlich, haben jedoch den Nachteil, dass sie in der Regel keine zwingenden Maßnahmen darstellen, um einen Zugriff auf vertrauliche Daten zu unterbinden. So können Mitarbeiter (zum Beispiel Administratoren oder Operator) eines Dienste-Providers kriminell sein oder bestochen werden oder sich in einer Zwangslage befinden, sodass oben genannte Vorschriften und Regeln missbräuchlich umgangen werden.

Ferner erfordern gängige Computernetz-Infrastrukturen für den Datenaustausch beziehungsweise zur Kommunikation Zugangsmöglichkeiten beziehungsweise Möglichkeiten der Ansprechbarkeit von Computersystemen (beispielsweise über Netzwerk), welche die Computersysteme empfindlich gegen Angriffe von außen machen. Die Druckschrift Rhodes, B. (2005) "On securing the Public Health Information Network Messaging System", 4th Annual PKI R&D Workshop "Multiple Paths to Truth", S. 194-201, befasst sich mit einer Kommunikation zwischen abgesicherten Computersystemen, wobei pollt ein hinter einer Firewall abgesichertes Computersystem in Richtung eines über Internet ansprechbaren Servers, um anzufragen, ob der Server Daten für das abgesicherte Computersystem bereithält.

Patentanmeldung US 2009/183234 stellt einen verwalteten Zugriff auf ein entferntes Datenverarbeitungsnetz bereit.

Die Aufgabe der vorliegenden Erfindung besteht darin, den Schutz vor unerlaubtem Zugriff auf insbesondere vertrauliche Daten innerhalb eines Computersystems, welches die Daten verarbeitet und speichert, durch technische Maßnahmen zu verbessern und dennoch eine zufriedenstellende Kommunikation und Informationsverarbeitung zwischen den Computersystemen einer Computernetz-Infrastruktur zu gewährleisten.

In einem ersten Aspekt wird diese Aufgabe durch ein Verfahren zur Kommunikation zwischen abgesicherten Computersystemen gelöst, umfassend die Schritte:
- Ergänzen einer vorbereiteten Task-Datei, um vorbestimmte Informationen in einem Quell-Computersystem,
- Übertragen der ergänzten Task-Datei vom Quell-Computersystem auf ein Task-Computersystem,
- Übertragen der ergänzten Task-Datei vom Task-Computersystem auf ein Ziel-Computersystem,
- Überprüfen der Gültigkeit der ergänzten Task-Datei durch das Ziel-Computersystem,
- Ausführen wenigstens eines Tasks im Ziel-Computersystem anhand der ergänzten Task-Datei, falls das Überprüfen der Gültigkeit der ergänzten Task-Datei erfolgreich war, wobei sowohl das Quell-Computersystem als auch das Ziel-Computersystem zumindest vorübergehend vorbestimmte Netzwerk-Ports geschlossen halten, sodass ein Zugriff über ein Netzwerk vermittels dieser Netzwerk-Ports verhindert wird.

Bei einem derartigen Verfahren verhalten sich Quell-Computersystem und Ziel-Computersystem als eingekapselte Systeme. Ein Zugriff über ein Netzwerk auf diese Computersysteme ist zumindest unter bestimmten Betriebsbedingungen (vorteilhaft während der Durchführung des hier erläuterten Verfahrens bzw. der obigen Verfahrensschritte) nicht möglich. Im Quell- beziehungsweise Ziel-Computersystem können sämtliche oder nur ausgewählte sicherheitskritische Netzwerk-Ports (kurz Ports) dauerhaft oder vorübergehend geschlossen sein. Dies hat den Vorteil, dass sowohl auf dem Quell- als auch auf dem Ziel-Computersystem keine Programme notwendig sind, die zum Zweck der Ansprechbarkeit beziehungsweise Zugänglichkeit von außen eingerichtet sind und eine potentielle Sicherheitslücke (zum Beispiel durch Buffer-Overflow) bilden. Ein Dritter ist in diesem Falle nicht mehr in der Lage, sich von außen mit herkömmlichen Mitteln am Produktions-Computersystem zu authentifizieren oder einzuloggen, zum Beispiel bei Unix-basierten Systemen über einen Secure-Shell- (SSH-) Daemon, oder spezielle Aktionen auf dem Quell- beziehungsweise Ziel-Computersystem durchzuführen.

Vorteilhaft halten sowohl das Quell-Computersystem als auch das Ziel-Computersystem zumindest vorübergehend vorbestimmte Netzwerk-Ports derart geschlossen, dass eine Ansprechbarkeit des Quell-Computersystems beziehungsweise des Ziel-Computersystems über ein Netzwerk zum Ablegen oder Abholen der Task-Datei verhindert wird. Insbesondere weisen sowohl das Quell-Computersystem als auch das Ziel-Computersystem keine ansprechbaren ("listening") Netzwerk-Ports auf, über die eine Verbindung zum Quell-Computersystem oder zum Ziel-Computersystem über Netzwerk aufgebaut werden kann, um eine Task-Datei auf dem Quell-Computersystem oder auf dem Ziel-Computersystem abzulegen oder von dort entsprechend abzuholen.

Im Unterschied zu dem Quell- und Ziel-Computersystem erlaubt das Verfahren jedoch einen Zugriff auf das Task-Computersystem von außen. Das Task-Computersystem kann dabei als "offenes" System mit wenigstens einem ansprechbaren offenen Port über Netzwerk zugänglich sein. Das bedeutet, dass auf dem Task-Computersystem beispielsweise Programme laufen und/oder Applikationen vorbereitet sind, sodass das Quell-Computersystem oder das Ziel-Computersystem eine Verbindung zum Task-Computersystem aufbauen können und auf das Task-Computersystem zugreifen können, um eine Task-Datei gemäß dem vorgestellten Verfahren im Task-Computersystem abzulegen oder vom Task-Computersystem abzuholen. Somit dient das Task-Computersystem als Vermittler für eine Kommunikation zwischen Quell- und Ziel-Computersystem, welche jedoch selbst eingekapselt sind. Auf diese Weise ist ein Routing-Verfahren zur Informationsweitergabe vermittels des Task-Computersystems trotz eingekapselter Einzelsysteme (Quell-Computersystem und Ziel-Computersystem) möglich.

Task-Dateien sind vorbereitet zur Ausführung vorbestimmter Prozesse in einem Ziel-Computersystem. Sie werden um bestimmte Informationen im Quell-Computersystem ergänzt, welche eine Event-Steuerung des Ziel-Computersystems beziehungsweise eine Informationsweitergabe zwischen Quell- und Ziel-Computersystem ermöglichen.

Eine Task-Datei unterscheidet sich grundlegend von einem reinen Kommando-Befehl eines Quell-Computersystems an ein Ziel-Computersystem, weil ein Kommando-Befehl zu dessen Auswertung auf Seiten des Ziel-Computersystems ein kontinuierlich laufendes, nach außen offenes und damit angreifbares Programm notwendig macht. Ein derartiges Programm entfällt jedoch, wie bereits erläutert, beim vorliegenden Verfahren mangels eines Zugriffs über Netzwerk auf das Ziel-Computersystem.

Zur Kommunikation mit einem Ziel-Computersystem ergänzt das Quell-Computersystem eine vorbereitete Task-Datei, um vorbestimmte Informationen (welche beispielsweise für das Ziel-Computersystem bestimmt sind) und überträgt die ergänzte Task-Datei auf das Task-Computersystem. Dabei erfolgt ein Ergänzen der Task-Datei lokal im abgesicherten Quell-Computersystem ohne Zugriffsmöglichkeit via Netzwerk von außen. Somit bleiben vertrauliche Daten innerhalb des Quell-Computersystems gegen Angriffe von entfernt liegenden Computersystemen nicht-autorisierter Dritter oder Krimineller geschützt.

Im Weiteren kann ein Ziel-Computersystem auf das Task-Computersystem zugreifen, sodass die ergänzte Task-Datei vom Task-Computersystem auf das Ziel-Computersystem übertragen wird. Hierzu kann ein Prozess angestoßen werden, welcher die ausgewählte Task-Datei im Task-Computersystem aufruft und automatisiert vom Task-Computersystem auf das Ziel-Computersystem überträgt. Vorteilhaft ist das automatisierte Übertragen der Task-Datei vom Task-Computersystem auf das Ziel-Computersystem so ausgestaltet, dass ein Dritter von außen darauf keine Einflussmöglichkeiten hat und somit eine Gefahr von Manipulationen des Ziel-Computersystems über die Task-Datei ausgeschlossen ist.

Im Ziel-Computersystem kann dann die Gültigkeit der ergänzten Task-Datei durch das Ziel-Computersystem lokal überprüft werden. Dazu kann beispielsweise der Inhalt der Task-Datei auf dem Ziel-Computersystem mit seinem internen, lokalen Datenbestand verifiziert werden. Manipulationen (sofern möglich) am Inhalt der Task-Datei auf dem Task-Computersystem, zum Beispiel durch einen Angreifer von außen, führen lediglich zu einer Fehlermeldung auf dem Ziel-Computersystem, welche zum Beispiel über ein Monitoring protokolliert wird.

Anschließend kann lokal auf dem Ziel-Computersystem ein entsprechender Task beziehungsweise Prozess angestoßen und ausgeführt werden, welcher mit der Task-Datei im Zusammenhang steht und abstrakt gesprochen ein bestimmtes Verhalten des Ziel-Computersystems ausgelöst durch die übertragene Task-Datei nach sich zieht. Konkret kann dies beispielsweise die Verarbeitung von in der Task-Datei enthaltenen Informationen oder das Ausführen eines Tasks anhand einer Anweisung, die in der Task-Datei enthalten ist, bedeuten. Entscheidend ist, dass nach Übertragen der Task-Datei auf das Ziel-Computersystem sämtliche Vorgänge lokal im eingekapselten Ziel-Computersystem ohne übliche Zugriffs- beziehungsweise Angriffsmöglichkeit von entfernt liegenden Computersystemen durch Dritte durchgeführt werden können.

Vermittels der Task-Datei beziehungsweise des Task-Computersystems ist auf diese Weise eine Kommunikation zwischen dem Quell-Computersystem und dem Ziel-Computersystem möglich. Die Kommunikation kann auch bidirektional sein, das heißt beide Computersysteme sind in diesem Fall sowohl Quelle als auch Ziel.

Der generelle Vorteil des Verfahrens gegenüber herkömmlichen Sicherheitslösungen besteht darin, dass ein Informationsaustausch trotz eingekapselter Quellbeziehungsweise Zielsysteme vermittels des Task-Computersystems möglich ist. Dennoch ist eine erhöhte Sicherheit vertraulicher Daten im Quell- sowie Ziel-Computersystem gewährleistet.

Vorteilhaft wird bei dem vorgestellten Verfahren die vorbereitete Task-Datei im Task-Computersystem vorgehalten und vor dem Ergänzen um vorbestimmte Informationen vom Task-Computersystem auf das Quell-Computersystem übertragen. In diesem Fall kann das Task-Computersystem einen "Pool" vorbereiteter Task-Dateien vorhalten, aus dem sich ein Quell-Computersystem eine vorbestimmte Task-Datei zur weiteren (lokalen) Spezifikation und Ergänzung abholen kann. Die Task-Dateien können beispielsweise allgemeine vorbereitete Dateien sein, welche zum Auslösen oder zur Steuerung vorbestimmter Prozesse im Ziel-Computersystem gegebenenfalls unter Ergänzung der erläuterten Informationen im Quell-Computersystem, herangezogen werden können. Die Task-Dateien können alternativ oder ergänzend auch ein "Ticket" darstellen, welches beispielsweise zur sequentiellen Abarbeitung von Kommunikationsverbindungen zwischen Quell- und Ziel-Computersystemen dient.

Vorzugsweise ist für eine erste Benutzergruppe ein lokaler Zugriff auf das Quell-Computersystem eingerichtet und für eine zweite Benutzergruppe ein lokaler Zugriff auf das Ziel-Computersystem eingerichtet. Ein lokaler Zugriff der jeweiligen Benutzergruppe auf das jeweils andere Computersystem wird jedoch verhindert. Das bedeutet, dass das Quell- beziehungsweise das Ziel-Computersystem lokal zugänglich für jeweils autorisierte Benutzer dieser Systeme ist. Der Zugriff der autorisierten Benutzer ist jedoch auf eines der entsprechenden Systeme idealerweise beschränkt.

Ein Verhindern eines Zugriffs auf das jeweils andere System kann generell bedeuten, dass für einen Benutzer das jeweilige Computersystem innerhalb eines Rechnernetzes zwar sichtbar und gegebenenfalls auch ansprechbar ist (beispielsweise über eine IP-Adresse), jedoch ein Zugriffsschutz (zum Beispiel über eine Zugriffssteuereinheit im entsprechenden Computersystem) vorgesehen ist, welche dem Benutzer keinen lokalen Login am entsprechenden Computersystem ermöglicht.

Es ist jedoch auch denkbar, dass ein Zugriff eines Benutzers einer verbotenen Benutzergruppe auf das entsprechende Computersystem dadurch verhindert wird, dass das Computersystem durch den Benutzer gar nicht angesprochen werden kann, weil es beispielsweise für den Benutzer im Rechnernetz gar nicht sichtbar ist. In diesem Fall ist das entsprechende Computersystem für den Benutzer dieser Benutzergruppe physisch unerreichbar und/oder beispielsweise über eine IP-Adresse nicht ansprechbar.

Durch die genannten Maßnahmen wird somit ein Zugriffsschutz auf unter Umständen vertrauliche Daten auf einem Quellbeziehungsweise Ziel-Computersystem dadurch verbessert, dass durch technische Maßnahmen ein unmittelbarer lokaler Zugriff eines nicht-autorisierten Benutzers auf Daten des entsprechenden Computersystems schlichtweg unterbunden werden kann.

Alternativ oder ergänzend ist denkbar, ein Zugriffsverbot auf ein Quell- beziehungsweise Ziel-Computersystem für bestimmte Benutzer dauerhaft einzurichten und/oder für bestimmte Benutzer in vorbestimmten Betriebszuständen der entsprechenden Computersysteme einzurichten. Im letzten Fall kann ein Zugriffsverbot zum Beispiel in einem Regel- oder Normalbetrieb eingerichtet sein und in einem Ausnahmebetrieb, zum Beispiel bei vorbestimmten notwendigen Maßnahmen (Zugriff auf korrupte Datenbank, etc.) aufgehoben sein.

Durch einen lokal eingerichteten Zugriff einer ersten Benutzergruppe auf das Quell-Computersystem beziehungsweise einer zweiten Benutzergruppe auf das Ziel-Computersystem können Ticket-Dateien lokal geprüft, ausgewertet und die enthaltenen Informationen anhand vordefinierter Prozesse (Tasks) verarbeitet werden. Dennoch bleibt das entsprechende Computersystem über ein Netzwerk aufgrund geschlossener Netzwerk-Ports (wie oben erläutert) unerreichbar.

Abgeholte Ticket-Dateien können wiederum lokal ergänzt und erneut vermittels des Task-Computersystems "auf die Reise" zu einem weiteren Ziel-Computersystem geschickt werden.

Bevorzugt umfassen die ergänzten vorbestimmten Informationen gemäß den vorgestellten Verfahren solche des Quell-Computersystems als Anweisungsgeber und/oder solche des Ziel-Computersystems als Anweisungsempfänger und/oder eine digitale Signatur des Quell-Computersystems und/oder vertrauliche Inhalte.

Das bedeutet, dass die Task-Datei Quelle und Ziel einer Kommunikation spezifizieren kann. Ferner kann eine qualifizierte Signatur (zum Beispiel bei Unix-basierten Systemen via GPG) erstellt werden, um die Quelle als vertraulich verifizieren zu können. Dies verhindert eine Manipulation der Task-Datei durch eine nicht-autorisierte Quelle. Beispielsweise kann eine Signatur dadurch erstellt werden, dass über vorbestimmte Daten eine Hash-Funktion (z.B. via MD5 oder SHA) gebildet wird, welche anschließend mit einem privaten Schlüssel eines Unterzeichners (beispielsweise innerhalb des Quell-Computersystems) verschlüsselt wird. Diese verschlüsselte Signatur wird gemeinsam mit einem Sicherheitszertifikat mit den entsprechenden Daten innerhalb einer digital signierten Datei zusammengefasst. Auf Empfängerseite (zum Beispiel lokal im Ziel-Computersystem) wird dann wiederum der Hash-Wert über die übermittelten Daten gebildet und mit dem Hash-Wert der digitalen Signatur verglichen, welche zuvor mit einem öffentlichen Schlüssel des Unterzeichners entschlüsselt wurde. Falls die beiden Hash-Werte übereinstimmen, ist die Signatur gültig und kennzeichnet eine vertrauenswürdige Quelle. Eine Manipulation dieses Systems erfordert die Berechnung oder Ermittlung der asymmetrischen Schlüssel (privater Schlüssel und öffentlicher Schlüssel). Ein weiterer genereller Vorteil des erläuterten Verfahrens besteht also darin, dass Signaturen mit Hilfe eines privaten Schlüssels nur lokal (und nicht über Netzwerk) vorgenommen werden können. Die privaten Schlüssel liegen dabei dezentral auf den jeweiligen beteiligten Systemen.

Zudem können vermittels der ergänzten Informationen vertrauliche Inhalte in der Task-Datei enthalten sein, zum Beispiel vorbestimmte Informationen für einen Ziel-Benutzer des Ziel-Computersystems. Die Task-Datei kann sämtliche Informationen zum Beispiel als .tar-File zusammenfassen.

Bevorzugt werden die ergänzten vorbestimmten Informationen wenigstens teilweise verschlüsselt. "Teilweise" bedeutet, dass nur ein Teil der Informationen verschlüsselt wird. Dabei kann es sich beispielsweise um einen sicherheitskritischen Teil der Informationen (welcher beispielsweise vertrauliche Daten umfasst) handeln. Kommandobefehle, wie z.B. der Befehl "reboot" können (und sollten vorteilhaft) von einer Verschlüsselung ausgenommen sein, um im Verfahrensablauf von beteiligten Instanzen (Quell-, Task-, Ziel-Computersysteme) erkennbar und verarbeitbar zu sein.

Auf diese Weise sind vertrauliche Informationen, welche in der Task-Datei im Task-Computersystem hinterlegt sind, gegen einen unbefugten Zugriff von außen abgesichert. Ein nicht-autorisierter Dritter kann dann zwar auf die Task-Datei zugreifen, jedoch der Task-Datei keine wertvollen Informationen entnehmen. Somit sind die Informationen, welche vermittels der Task-Computersysteme zugänglich sind, für unbefugte Personen wertlos. Erst in den lokal abgesicherten Quell- beziehungsweise Ziel-Computersystemen werden die Informationen derart verarbeitet, dass sie lokal für autorisierte Benutzer zugänglich sind. Eine Verschlüsselung der ergänzten Informationen in den Task-Dateien kann beispielsweise über GPG erfolgen.

Vorzugsweise umfasst das Übertragen der ergänzten Task-Datei vom Task-Computersystem auf das Ziel-Computersystem die folgenden Schritte:
- Senden einer vorbestimmten Sequenz an Paket-Daten vom Task-Computersystem oder vom Quell-Computersystem an das Ziel-Computersystem, wobei die vorbestimmten Netzwerk-Ports des Ziel-Computersystems geschlossen sind und wobei die Sequenz in einer vorbestimmten Reihenfolge einen oder mehrere Netzwerk-Ports des Ziel-Computersystems anspricht,
- Überprüfen der gesendeten Sequenz auf Übereinstimmung mit einer vordefinierten Sequenz im Ziel-Computersystem, sowie
- Veranlassen des Übertragens der ergänzten Task-Datei durch das Ziel-Computersystem, falls die Überprüfung der gesendeten Sequenz positiv ist.

Diese zusätzlichen Verfahrensschritte haben den Vorteil, dass grundsätzlich sämtliche (für das Verfahren maßgebliche) Netzwerk-Ports (kurz Ports) des Ziel-Computersystems dauerhaft geschlossen sind und einen Zugriff auf das Ziel-Computersystem von außen blockieren. Ergänzend können im Zusammenhang mit diesen Verfahrensschritten auch sämtliche Ports des Quell-Computersystems dauerhaft geschlossen sein. Ein Prozess zum Übertragen der jeweiligen Task-Datei (zum Beispiel via SCP) kann gestartet werden, nachdem eine vorbestimmte Sequenz an Paket-Daten an das Ziel-Computersystem gesendet wurde und falls die Sequenz mit einer vordefinierten Sequenz übereinstimmt.

Ein derartiges Verfahren ist auch unter dem Begriff "Port-Knocking" (englisch: to knock = anklopfen) bekannt. Die vorgenannten Schritte können beispielsweise über einen sogenannten Knock-Daemon, also ein Programm, welches Port-Knocking ermöglicht, durchgeführt werden. Der Knock-Daemon sitzt an den Ports des Ziel-Computersystems, überprüft die an das Ziel-Computersystem gesendete Sequenz von Paket-Daten und veranlasst gegebenenfalls ein gesteuertes Übertragen der entsprechenden Task-Datei, wenn die gesendete Sequenz mit einer vordefinierten Sequenz übereinstimmt. Der oben beschriebene Ablauf ermöglicht somit das Übertragen/Kopieren der Task-Datei vom Task-Computersystem an das Ziel-Computersystem, ohne dass das Ziel-Computersystem hierfür einen offenen Port mit einem ansprechbaren Programm laufen hat.

Alternativ oder ergänzend zum oben erläuterten Port-Knocking ist auch denkbar, dass das Ziel-Computersystem von sich aus in regelmäßigen Abständen beim Task-Computersystem oder beim Quell-Computersystem anfragt (polling), ob eine oder mehrere auszutauschende Task-Beschreibungsdateien vorliegen. Ist dies der Fall, kann eine entsprechende Übertragung der Task-Datei vom Task-Computersystem an das Ziel-Computersystem initiiert werden. Es ist auch denkbar, dass das Ziel-Computersystem ein polling durchführt, wenn z.B. eine bestimmte Zeitspanne überschritten wird, in der kein Port-Knocking vom Quell- oder Task-Computersystem durchgeführt worden ist. Probleme beim Port-Knocking können so erkannt werden und die Funktionalität bleibt erhalten.

Das Übertragen der Task-Datei vom Task-Computersystem an das Ziel-Computersystem wird vorteilhaft durch das Ziel-Computersystem veranlasst. Dies hat den Vorteil, dass ein Übertragen der Task-Datei auf Anweisung des Ziel-Computersystems erfolgt (zum Beispiel über SCP), wobei das Ziel-Computersystem beispielsweise den Austausch-Prozess steuern kann. Das Ziel-Computersystem verhält sich dabei nicht passiv abwartend, bis die Task-Datei gesendet wird.

Vorteilhaft wird die Task-Datei vor dem Übertragen an das Ziel-Computersystem in ein vordefiniertes Austausch-Verzeichnis innerhalb einer Verzeichnisstruktur des Task-Computersystems abgelegt. Die Task-Datei kann beispielsweise in das Austausch-Verzeichnis kopiert werden, sodass sie für einen erneuten Aufruf zu einem späteren Zeitpunkt weiterhin im Task-Computersystem vorliegt und aufgerufen werden kann. Ein weiterer Vorteil liegt darin, dass auf Initiative des Ziel-Computersystems zum Übertragen der Task-Datei auf ein vordefiniertes Austausch-Verzeichnis zugegriffen wird, ohne die Task-Datei im Task-Computersystem suchen zu müssen. Somit fungiert das Austausch-Verzeichnis als Pull-Verzeichnis, aus dem das Ziel-Computersystem die Task-Datei zum Übertragen abholen kann. Dies erleichtert einen Übertragungsprozess, zum Beispiel via SCP.

Vorteilhaft wird vor dem Übertragen der ergänzten Task-Datei vom Task-Computersystem auf das Ziel-Computersystem die Dateigröße der Task-Datei durch das Ziel-Computersystem abgefragt, wobei die Task-Datei nur auf das Ziel-Computersystem übertragen wird, wenn die Dateigröße einen vorbestimmten Grenzwert nicht überschreitet.

Auf diese Weise kann eine Manipulation einer durch einen nichtautorisierten Dritten abgefangenen Task-Datei durch "Aufblähen" und somit eine mögliche Schädigung des Ziel-Computersystems oder eine Beeinträchtigung des Traffics zwischen den Systemen verhindert werden.

Vorzugsweise wird die ergänzte Task-Datei vom ersten Task-Computersystem zumindest an ein zweites Task-Computersystem weitergeleitet. Das bedeutet, dass auf dem Kommunikationsweg zwischen dem Quell-Computersystem und dem Ziel-Computersystem unter Umständen mehrere Task-Computersysteme zwischengeschaltet sein können, welche räumlich oder geografisch verteilt sein können. Task-Dateien können dabei gegebenenfalls in einer vorgegebenen Reihenfolge (zeitlich und/oder örtlich) abgearbeitet werden. Auf diese Weise ist ein Routing-Verfahren zur Informationsweitergabe vermittels mehrerer Task-Computersysteme trotz eingekapselter Einzelsysteme (Quell-Computersystem und Ziel-Computersystem) möglich.

Vorteilhaft umfasst das Verfahren ergänzend zu den vorgenannten Maßnahmen die weiteren Schritte:
- Übertragen der ergänzten Task-Datei vom zweiten Task-Computersystem auf ein zweites Quell-Computersystem, welches sich vom ersten Quell-Computersystem unterscheidet,
- weiteres Ergänzen der Task-Datei um weitere Informationen im zweiten Quell-Computersystem,
- Übertragen der weiter ergänzten Task-Datei vom zweiten Quell-Computersystem zurück auf das zweite Task-Computersystem.

Das zweite Task-Computersystem kann dann die ergänzte Task-Datei an das Ziel-Computersystem oder an ein weiteres Task-Computersystem weitersenden.

Auch hier können die durch das zweite Quell-Computersystem ergänzten Informationen sich wie oben erläutert zusammensetzen. Dies kann eine weitere Signatur des zweiten Quell-Computersystems, weitere vertrauliche Inhalte, sowie weitere Informationen des zweiten Quell-Computersystems als zusätzlichen Anweisungsgeber beziehungsweise des Ziel-Computersystems als erneuten Anweisungsempfänger, usw. umfassen.

Die gerade erläuterten weiteren Verfahrensschritte können, unter Umständen für mehrere Task-Computersysteme und/oder mehrere Quell-Computersysteme, iterativ fortgesetzt werden. Jedes Quell-Computersystem kann entsprechende Informationen der Task-Datei hinzufügen, diese ergänzen und somit entsprechende Informationen an ein Ziel-Computersystem weitergeben. Es ist alternativ oder ergänzend aber auch denkbar, das grundlegende Verfahren mit einigen oder allen der oben erläuterten Maßnahmen bzw. Schritte gänzlich iterativ durchzuführen. Auf diese Weise kann ein Ziel-Computersystem erneut Quell-Computersystem sein und umgekehrt. Somit ist ein gegebenenfalls bidirektionales Routing-Verfahren zur Informationsweitergabe möglich.

Beispielhaft und nicht abschließend sind folgende generelle Abläufe denkbar:

### Beispiel 1:

a) Quell-Computersystem 1 -> Task-Computersystem -> Ziel-Computersystem 1;
b) Ziel-Computersystem 1 wird zu Quell-Computersystem 2;
c) Quell-Computersystem 2 -> Task-Computersystem -> Ziel-Computersystem 2 (usw.). Dabei kann das Ziel-Computersystem 2 das ursprüngliche Quell-Computersystem 1 oder ein anderes Ziel sein.

### Beispiel 2:

a) Quell-Computersystem 1 -> Task-Computersystem -> Quell-Computersystem 2;
b) Quell-Computersystem 2 ergänzt Task-Datei;
c) Quell-Computersystem 2 -> Task-Computersystem -> Ziel-Computersystem.

Bei beiden dargestellten Beispielen können ein oder mehrere Task-Computersysteme zur Informationsweitergabe eingesetzt werden.

Ein kumulatives Signieren der Task-Datei durch mehrere Quell-Computersysteme bei dezentraler Topologie einer auf diese Weise eingerichteten Computernetz-Infrastruktur führt zu erhöhter Sicherheit gegen Angriffe. Denn ein Angreifer müsste jede Signatur eines jeden beteiligten Systems manipulieren, um letztlich Daten auf nicht-autorisierte Pfade "umzuleiten" beziehungsweise als vermeintlich vertrauliche Quelle Daten manipulieren oder abgreifen zu können.

Alternativ oder ergänzend zu den genannten Maßnahmen besteht die Möglichkeit der Einrichtung von sogenannten Verfallsdaten in den Task-Dateien, zum Beispiel Zeitstempel, Zufalls-Stempel, usw., welche auf ihre Gültigkeit hin geprüft werden müssen, um eine Task-Datei in einem entsprechenden Ziel-Computersystem verarbeiten zu können. Auch dies erhöht die Zugriffssicherheit beziehungsweise die Sicherheit gegen Manipulationen durch unberechtigte Dritte.

Ein entsprechender Zugriff von Benutzern einer autorisierten Benutzergruppe auf das zweite Quell-Computersystem kann, wie oben für das erste Quell-Computersystem erläutert, eingerichtet sein.

Die Aufgabe wird in einem weiteren Aspekt durch eine Computernetz-Infrastruktur gelöst, welche zumindest umfasst:
- ein Quell-Computersystem,
- ein Ziel-Computersystem und
- ein Task-Computersystem,
wobei das Quell-Computersystem eingerichtet ist, eine vorbereitete Task-Datei um vorbestimmte Informationen zu ergänzen und anschließend die ergänzte Task-Datei an das Task-Computersystem zu übertragen, und wobei das Ziel-Computersystem eingerichtet ist, eine vom Task-Computersystem an das Ziel-Computersystem übertragene ergänzte Task-Datei auf ihre Gültigkeit zu überprüfen und gegebenenfalls wenigstens einen Task im Ziel-Computersystem anhand der ergänzten Task-Datei auszuführen, wobei das Quell-Computersystem und das Ziel-Computersystem jeweils eine Zugriffssteuereinheit aufweisen, die eingerichtet ist, zumindest vorübergehend vorbestimmte Netzwerk-Ports zu schließen, sodass ein Zugriff über ein Netzwerk vermittels dieser Netzwerk-Ports verhindert ist.

Vorteilhaft weisen das Quell-Computersystem und das Ziel-Computersystem jeweils eine Zugriffssteuereinheit auf, die eingerichtet ist, zumindest vorübergehend vorbestimmte Netzwerk-Ports derart geschlossen zu halten, dass eine Ansprechbarkeit des Quell-Computersystems beziehungsweise des Ziel-Computersystems über ein Netzwerk zum Ablegen oder Abholen der Task-Datei verhindert ist. Insbesondere steuern die Zugriffssteuereinheiten die jeweiligen Computersysteme so, dass sowohl das Quell-Computersystem als auch das Ziel-Computersystem keine ansprechbaren ("listening") Netzwerk-Ports aufweisen, über die eine Verbindung zum Quell-Computersystem oder zum Ziel-Computersystem über Netzwerk aufgebaut werden kann, um eine Task-Datei auf dem Quell-Computersystem oder auf dem Ziel-Computersystem abzulegen oder von dort entsprechend abzuholen.

Vorteilhaft weist das Task-Computersystem eine Zugriffssteuereinheit auf, die eingerichtet ist, wenigstens einen offenen Netzwerk-Port über Netzwerk derart ansprechbar zu halten, dass das Quell-Computersystem oder das Ziel-Computersystem auf das Task-Computersystem zugreifen können, um die Task-Datei im Task-Computersystem abzulegen oder vom Task-Computersystem abzuholen.

Diese Computernetz-Infrastruktur hat den Vorteil, dass Quell-Computersystem und Ziel-Computersystem eingekapselte Systeme darstellen. Ein Zugriff über Netzwerk auf diese Computersysteme ist zumindest unter bestimmten Betriebsbedingungen nicht möglich. Es können sämtliche oder nur ausgewählte sicherheitskritische Ports geschlossen sein. Ein Zugriff auf das Task-Computersystem kann jedoch erlaubt sein. Das Task-Computersystem kann dabei als "offenes" System mit einem oder mehreren offenen Ports über Netzwerk zugänglich sein und wird vorteilhaft mit üblichen Maßnahmen gegen Angriffe abgesichert bzw. gehärtet.

Auf diese Weise ist die Computernetz-Infrastruktur eingerichtet, Task-Dateien zur Ausführung vorbestimmter Prozesse im Ziel-Computersystem vorzuhalten. Das Quell-Computersystem ist eingerichtet, diese Task-Dateien um bestimmte Informationen zu ergänzen, welche eine Event-Steuerung des Ziel-Computersystems beziehungsweise eine Informationsweitergabe zwischen Quell- und Ziel-Computersystem ermöglichen.

Die Computernetz-Infrastruktur kann vorteilhaft derart eingerichtet sein, dass eine Kommunikation zwischen Quell-Computersystem und Ziel-Computersystem bidirektional eingerichtet ist, das heißt beide Computersysteme sind in dem Fall sowohl Quelle als auch Ziel.

Eine derart eingerichtete Computernetz-Infrastruktur hat den Vorteil, dass ein Informationsaustausch trotz eingekapselter Quell- und Ziel-Computersysteme vermittels eines Task-Computersystems möglich ist. Dennoch ist eine erhöhte Sicherheit vertraulicher Daten im Quell- sowie Ziel-Computersystem gewährleistet.

Vorteilhaft ist die Computernetz-Infrastruktur eingerichtet, ein Verfahren der hier erläuterten Art durchzuführen. Sämtliche Merkmale des Verfahrens sind auch auf die Computernetz-Infrastruktur anwendbar und umgekehrt.

Das hier erläuterte Verfahren beziehungsweise die erläuterte Computernetz-Infrastruktur wird im Folgenden anhand einer Zeichnung näher erläutert.

Es zeigen:
- Figur 1: eine schematisierte Darstellung einer Computernetz-Infrastruktur zur Durchführung eines Verfahrens zur Kommunikation zwischen abgesicherten Computersystemen gemäß einer ersten Konfiguration,
- Figur 2: eine schematisierte Darstellung der Computernetz-Infrastruktur gemäß Figur 1 zur Durchführung eines Verfahrens zur Kommunikation zwischen abgesicherten Computersystemen gemäß einer zweiten Konfiguration, sowie
- Figur 3: eine schematisierte Darstellung einer Computernetz-Infrastruktur gemäß einer alternativen Ausführung zur Durchführung eines Verfahrens zur Kommunikation zwischen abgesicherten Computersystemen.

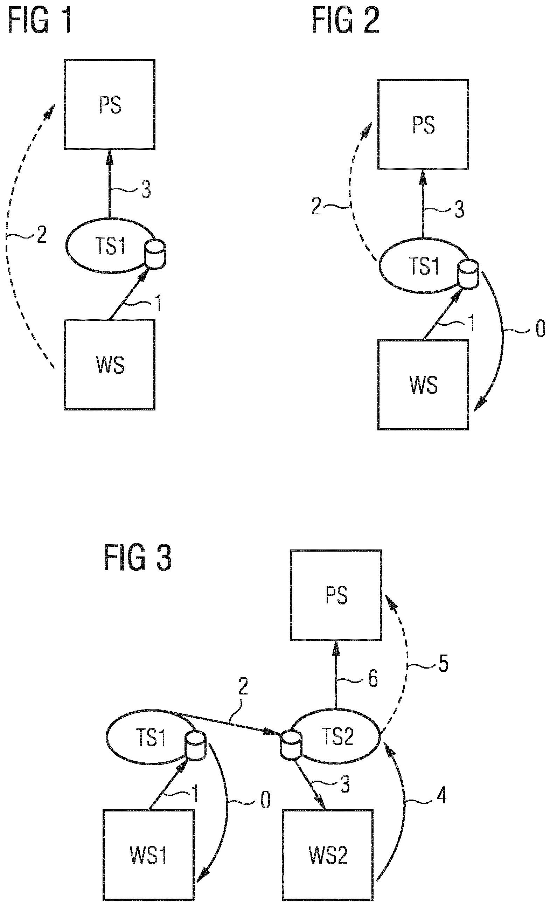

Figur 1 zeigt eine schematisierte Darstellung einer Computernetz-Infrastruktur umfassend eine Workstation WS, einen Produktionsserver PS sowie einen Task-Server TS1. Die Workstation WS und der Produktionsserver PS sind derart eingekapselte Systeme, dass ein Zugriff über Netzwerk auf diese Computersysteme zumindest unter bestimmten Betriebsbedingungen nicht möglich ist. Hierzu können die Workstation WS und der Produktionsserver PS zumindest vorübergehend vorbestimmte Netzwerk-Ports (kurz: Ports) geschlossen halten, sodass ein Zugriff über ein Netzwerk vermittels dieser Ports verhindert wird. Zu diesem Zwecke können in der Workstation WS beziehungsweise im Produktionsserver PS Zugriffssteuereinheiten eingerichtet sein, die eine Blockade der entsprechenden Ports steuern.

Insbesondere können die Workstation WS und der Produktionsserver PS zumindest vorübergehend vorbestimmte Ports derart geschlossen halten, dass eine Ansprechbarkeit zum Aufbauen einer Verbindung zu diesen Computersystemen über ein Netzwerk vermittels dieser Ports verhindert wird. Somit sind die betreffenden Ports keine ansprechbaren ("listening") Ports.

Ein Zugriff auf die Workstation WS beziehungsweise den Produktionsserver PS kann ausschließlich lokal für autorisierte Benutzer aus jeweils vorbestimmten Benutzergruppen eingerichtet sein. Beispielsweise kann eine erste Benutzergruppe lokalen Zugriff auf die Workstation WS haben und eine zweite Benutzergruppe lokalen Zugriff auf den Produktionsserver PS.

Die Workstation WS, der Produktionsserver PS und der Task-Server TS1 bilden Kernkomponenten eines Verfahrens zur Kommunikation zwischen der Workstation WS und dem Produktionsserver PS.

Gemäß Figur 1 wird in der Workstation WS eine vorbereitete Task-Datei vorgehalten, welche (beispielsweise vermittels eines Benutzers der Workstation WS) lokal innerhalb der Workstation WS um vorbestimmte Informationen für eine Kommunikation mit dem Produktionsserver PS ergänzt wird. Die Workstation WS fungiert dabei als Quell-Computersystem.

Die ergänzten vorbestimmten Informationen können beispielsweise Informationen der Workstation WS als Anweisungsgeber und/oder Informationen des Produktionsservers PS als Anweisungsempfänger und/oder eine digitale Signatur der Workstation WS und/oder vertrauliche Inhalte für eine Kommunikation zwischen der Workstation WS und dem Produktionsserver PS (zum Beispiel Benutzer- oder Kundendaten) enthalten.

Vermittels der in der Workstation WS vorgehaltenen Task-Datei kann somit die Workstation WS als Quelle und der Produktionsserver PS als Ziel spezifiziert werden. Ferner kann eine qualifizierte Signatur (zum Beispiel via GPG) erstellt werden, um die Workstation WS als vertrauliche Quelle verifizieren zu können. Dies verhindert eine Manipulation der Task-Datei durch eine nicht-autorisierte Quelle. Sämtliche Informationen können in der Task-Datei z.B. als .tar-File zusammengefasst sein.

In einem Schritt 1 wird die um vorbestimmte Informationen ergänzte Task-Datei von der Workstation WS, welche beispielsweise logisch hinter einem sogenannten NAT-Router (NAT = Network Address Translation) angeordnet ist, an den Task-Server TS1 geschickt und dort lokal abgelegt. Der Task-Server TS1 ist im Vergleich zu der Workstation WS und dem Produktionsserver PS über Netzwerk erreichbar, weist also wenigstens einen offenen Port auf, an dem beispielsweise ein SSH-Daemon für den Zugriff auf den Task-Server TS1 eingerichtet ist. Auf diese Weise fungiert der Task-Server TS1 als Vermittler für eine Kommunikation zwischen der Workstation WS und dem Produktionsserver PS.

Wenn die Task-Datei im Task-Server TS1 abgelegt ist, wird in einem Schritt 2 ein automatisierter Prozess zum Übertragen der Task-Datei vom Task-Server TS1 auf den Produktionsserver PS ausgelöst. Dies geschieht dadurch, dass die Workstation WS im Schritt 2 eine vorbestimmte Sequenz an Paket-Daten an den Produktionsserver PS schickt, wobei weiterhin sämtliche oder sicherheitsrelevante vorbestimmte Netzwerk-Ports des Produktionsservers PS geschlossen sind. Die Sequenz kann beispielsweise eine sogenannte Port-Knocking-Sequenz sein, die über einen Knock-Daemon erzeugt beziehungsweise verarbeitet wird. Auf diese Weise spricht die Sequenz in einer vorbestimmten Reihenfolge einen oder mehrere Netzwerk-Ports des Produktionsservers PS an, wobei der Knock-Daemon am Produktionsserver PS die gesendete Sequenz auf Übereinstimmung mit einer vordefinierten Sequenz überprüft und das Übertragen der ergänzten Task-Datei vom Task-Server TS1 an den Produktionsserver PS veranlasst, wenn die Überprüfung der gesendeten Sequenz positiv ist.

Wenn dies der Fall ist, wird in einem Schritt 3 die Task-Datei vom Task-Server TS1 an den Produktionsserver PS übertragen. Dazu kann der Produktionsserver PS beispielsweise auf einen offenen Port des Task-Servers TS1 zugreifen, eine Verbindung zum Task-Server TS1 aufbauen und beispielsweise über das SCP-Protokoll die Task-Datei vom Task-Server TS1 abholen und im Produktionsserver PS ablegen.

Anschließend kann im Produktionsserver PS die Gültigkeit der Task-Datei überprüft werden. Dies betrifft beispielsweise die Frage, ob vorbestimmte Informationen zur Durchführung eines Prozesses im Produktionsserver PS situationsabhängig eingehalten werden oder nicht. Hierzu können beispielsweise Zeitstempel, Prüfsummen, Informationen der Workstation WS als Quelle beziehungsweise Informationen des Produktionsserver PS als Ziel usw. abgefragt werden und mit Vergleichsinformationen im Produktionsserver PS abgeglichen werden. Ferner kann eine Signatur der Workstation WS auf ihre Gültigkeit hin verifiziert werden.

Falls die Task-Datei im Produktionsserver PS als gültig bewertet wurde, kann ein mit der Task-Datei zusammenhängender Prozess im Produktionsserver PS gestartet und ausgeführt werden, welcher beispielsweise vorbestimmte Informationen aus der Task-Datei extrahiert und verarbeitet. Hierzu können beispielsweise vertrauliche Inhalte der Workstation WS in einem Speicher des Produktionsservers PS abgelegt werden (beispielsweise Kundendaten eines Endkunden, welcher die Workstation bedient, in einer Datenbank).

Auf diese Weise ist eine Kommunikation zwischen einer lokal eingekapselten Workstation WS und einem lokal eingekapselten Produktionsserver PS vermittels des Task-Servers TS1 möglich, wobei sowohl die Workstation WS als auch der Produktionsserver PS derart gegen Angriffe unbefugter Dritter abgeschottet sind, dass ein Zugriff bzw. eine Ansprechbarkeit über Netzwerk nicht möglich ist. Weder auf der Workstation WS noch auf dem Produktionsserver PS sind dabei offene ansprechbare Ports vorhanden, an denen Programme laufen, welche einen Angriff von außen ermöglichen würden.

Die Konstellation in Figur 1 ist beispielsweise denkbar, wenn eine Workstation WS einen VPN-Tunnel zu einem Produktionsserver PS aufbauen möchte, obwohl zunächst beide Systeme entsprechend eingekapselt sind. Hierzu kann die Workstation WS eine Task-Datei spezifizieren, um eine VPN-Verbindung zum Produktionsserver PS aufzubauen. Diese Task-Datei wird im Task-Server TS1 abgelegt und nach einem entsprechenden Port-Knocking der Workstation WS am Produktionsserver PS vom Task-Server TS1 auf den Produktionsserver PS übertragen. Dort wird nach Prüfung der Gültigkeit der Task-Datei ein Prozess ausgelöst, welcher beispielsweise ausschließlich für die IP-Adresse der Workstation WS (vermittels ihres NAT-Routers) einen entsprechenden Port am Produktionsserver PS öffnet, sodass eine VPN-Verbindung zwischen der Workstation WS und dem Produktionsserver PS aufgebaut werden kann.

Figur 2 zeigt die Konstellation der Computernetz-Infrastruktur gemäß Figur 1, wobei in diesem Falle ein Verfahren zur Kommunikation zwischen der Workstation WS und dem Produktionsserver PS in leicht abgewandelter Form durchgeführt wird. Gemäß Figur 2 ist eine Task-Datei zunächst als allgemeine vorbereitete Datei im Task-Server TS1 hinterlegt. In einem Schritt 0 initiiert die Workstation vermittels eines offenen Ports am Task-Server TS1 eine Verbindung zum Task-Server TS1 und kopiert, beispielsweise via SCP, die Task-Datei vom Task-Server TS1 auf die Workstation WS. Anschließend läuft das Verfahren, wie es gemäß Figur 1 erläutert wurde, ab.

Hierzu kopiert die Workstation WS eine spezifizierte und ergänzte Task-Datei in Schritt 1 zurück auf den Task-Server TS1. Nach Rückübertragung der spezifizierten Task-Datei von der Workstation WS auf den Task-Server TS1 erfolgt in dieser Konfiguration zunächst keine Aktion der Workstation WS mehr. Allerdings vollführt nunmehr der Task-Server TS1 einen Port-Knocking-Prozess an den Produktionsserver PS, wobei der Produktionsserver PS aufgefordert wird, via SCP die spezifizierte Task-Datei vom Task-Server TS1 auf den Produktionsserver zu kopieren.

Figur 3 zeigt eine alternative Topologie einer Computernetz-Infrastruktur zur Kommunikation zwischen mehreren eingekapselten Computersystemen.

Hierbei umfasst die Computernetz-Infrastruktur eine erste Workstation WS1, eine zweite Workstation WS2, einen ersten Task-Server TS1, einen zweiten Task-Server TS2 sowie einen Produktionsserver PS.

Zunächst wird im Schritt 0 eine allgemeine vorbereitete Task-Datei vom Task-Server TS1 auf die Workstation WS1 via SCP kopiert. Innerhalb der Workstation WS1 kann die Task-Datei lokal ergänzt und spezifiziert werden. Beispielsweise können Benutzerdaten eines Benutzers der Workstation WS1 in die Task-Datei eingepflegt, dort verschlüsselt und die Task-Datei anschließend mit einer Signatur der Workstation WS1 signiert werden.

In einem Schritt 1 wird diese Task-Datei dann zurück auf den Task-Server TS1 kopiert und dort lokal abgelegt.

In einem weiteren Schritt 2 wird nun die Task-Datei an einen räumlich oder geografisch entfernten weiteren Task-Server TS2 weitergeleitet. Der Task-Server TS2 ist einer Workstation WS2 zugeordnet, auf die eine weitere Benutzergruppe lokalen Zugriff hat. Auf diese Weise kann die durch die erste Workstation WS1 signierte Task-Datei in einem Schritt 3 auf die zweite Workstation WS2 via SCP kopiert werden, wobei dort zunächst deren Gültigkeit geprüft wird und anschließend beispielsweise ein weiterer Benutzer der Workstation WS2 weitere Informationen ergänzt und diese in die Task-Datei einpflegt. Zudem kann eine Verschlüsselung sowie eine Signatur der Workstation WS2 hinzugefügt werden.

Im Schritt 4 wird die weiter spezifizierte Task-Datei zurück auf den Task-Server TS2 kopiert.

Anschließend vollführt im Schritt 5 der Task-Server TS2 einen Port-Knocking-Prozess an den Produktionsserver PS.

Schlussendlich wird im Schritt 6 durch den Produktionsserver PS ein SCP-Kommando auf dem Task-Server TS2 ausgeführt, sodass die kumulativ ergänzte und signierte Task-Datei vom Task-Server TS2 auf den Produktionsserver PS kopiert, dort verifiziert und lokal weiterverarbeitet werden kann.

Die Konstellation gemäß Figur 3 kann beliebig iterativ fortgesetzt werden. Jede Workstation WS1 und WS2 kann entsprechende Informationen weitergeben. Auf diese Weise können beliebige Workstations und Task-Server, welche räumlich oder geografisch verteilt sein können, beteiligt sein, um Informationen zwischen geschützten und eingekapselten Computersystemen via den Task-Servern an Produktionsserver PS als Ziele zu kommunizieren.

Auf diese Weise ist ein Routing-Verfahren zur Informationsweitergabe trotz eingekapselter Einzelsysteme möglich. Ein kumulatives Signieren bei dezentraler Topologie der Computernetz-Infrastruktur führt zu erhöhter Sicherheit gegen Angriffe. Ein Angreifer müsste jede Signatur eines jeden beteiligten Systems manipulieren, um letztlich Daten auf nicht-autorisierte Pfade umzuleiten.

Die dargestellten Topologien beziehungsweise fachübliche Verfahren des Datenaustausches beziehungsweise der Konfiguration einzelner Computersysteme sind lediglich beispielhaft gewählt und können von einem Fachmann aufgrund seines Fachwissens entsprechend angepasst werden, ohne vom Kerngedanken des vorgestellten Verfahrens beziehungsweise der vorgestellten Computernetz-Infrastruktur abzuweichen.

Sämtliche Nomenklaturen sind lediglich beispielhaft gewählt.

### Bezugszeichenliste

- 0 bis 6: Verfahrens-/Ablaufschritte
- PS: Produktionsserver
- WS, WS1, WS2: Workstation
- TS1, TS2: Task-Server

## Patentansprüche

1. Verfahren zur Kommunikation zwischen abgesicherten Computersystemen (WS, WS1, WS2, PS), umfassend die Schritte:
- Vorhalten einer vorbereiteten Task-Datei in einem Task-Computersystem (TS1, TS2),
- Übertragen der vorbereiteten Task-Datei vom Task-Computersystem (TS1, TS2) auf ein Quell-Computersystem (WS, WS1, WS2),
- Ergänzen der vorbereiteten Task-Datei um vorbestimmte Informationen im Quell-Computersystem (WS, WS1, WS2),
- Übertragen der ergänzten Task-Datei vom Quell-Computersystem (WS, WS1, WS2) auf das Task-Computersystem (TS1, TS2),
- Übertragen der ergänzten Task-Datei vom Task-Computersystem (TS1, TS2) auf ein Ziel-Computersystem (PS),
- Überprüfen der Gültigkeit der ergänzten Task-Datei durch das Ziel-Computersystem (PS),
- Ausführen wenigstens eines Tasks im Ziel-Computersystem (PS) anhand der ergänzten Task-Datei, falls das Überprüfen der Gültigkeit der ergänzten Task-Datei erfolgreich war,
wobei sowohl das Quell-Computersystem (WS, WS1, WS2) als auch das Ziel-Computersystem (PS) zumindest vorübergehend vorbestimmte Netzwerk-Ports derart geschlossen halten, dass eine Ansprechbarkeit des Quell-Computersystems (WS, WS1, WS2) beziehungsweise des Ziel-Computersystems (PS) über ein Netzwerk zum Ablegen oder Abholen der Task-Datei verhindert wird, jedoch das Task-Computersystem (TS1, TS2) mit wenigstens einem ansprechbaren offenen Netzwerk-Port über Netzwerk derart zugänglich ist, dass das Quell-Computersystem (WS, WS1, WS2) oder das Ziel-Computersystem (PS) auf das Task-Computersystem (TS1, TS2) zugreifen können, um die Task-Datei im Task-Computersystem (TS1, TS2) abzulegen oder vom Task-Computersystem (TS1, TS2) abzuholen, und
wobei das Übertragen der ergänzten Task-Datei vom Task-Computersystem (TS1, TS2) auf das Ziel-Computersystem (PS) die folgenden Schritte umfasst:
- Senden einer vorbestimmten Sequenz an Paket-Daten vom Task-Computersystem (TS1, TS2) oder vom Quell-Computersystem (WS, WS1, WS2) an das Ziel-Computersystem (PS), wobei die vorbestimmten Netzwerk-Ports des Ziel-Computersystems (PS) geschlossen sind und wobei die Sequenz in einer vorbestimmten Reihenfolge einen oder mehrere Netzwerk-Ports des Ziel-Computersystems (PS) anspricht,
- Überprüfen der gesendeten Sequenz auf Übereinstimmung mit einer vordefinierten Sequenz im Ziel-Computersystem (PS), sowie
- Veranlassen des Übertragens der ergänzten Task-Datei durch das Ziel-Computersystem (PS), falls die Überprüfung der gesendeten Sequenz positiv ist,
wobei das Ziel-Computersystem (PS) eine Verbindung zum Task-Computersystem (TS1, TS2) aufbaut und die ergänzte Task-Datei vom Task-Computersystem (TS1, TS2) abholt.

2. Verfahren nach Anspruch 1, wobei für eine erste Benutzergruppe ein lokaler Zugriff auf das Quell-Computersystem (WS, WS1, WS2) eingerichtet ist und für eine zweite Benutzergruppe ein lokaler Zugriff auf das Ziel-Computersystem (PS) eingerichtet ist, jedoch ein lokaler Zugriff der jeweiligen Benutzergruppe auf das jeweils andere Computersystem verhindert wird.

3. Verfahren nach Anspruch 1 oder 2, wobei die ergänzten vorbestimmten Informationen solche des Quell-Computersystems (WS, WS1, WS2) als Anweisungsgeber und/oder solche des Ziel-Computersystems (PS) als Anweisungsempfänger und/oder eine digitale Signatur des Quell-Computersystems (WS, WS1, WS2) und/oder vertrauliche Inhalte umfassen.

4. Verfahren nach einem der Ansprüche 1 bis 3, wobei die ergänzten vorbestimmten Informationen wenigstens teilweise verschlüsselt werden.

5. Verfahren nach einem der Ansprüche 1 bis 4, wobei vor dem Übertragen der ergänzten Task-Datei vom Task-Computersystem (TS1, TS2) auf das Ziel-Computersystem (PS) die Dateigröße der Task-Datei durch das Ziel-Computersystem (PS) abgefragt wird, wobei die Task-Datei nur auf das Ziel-Computersystem (PS) übertragen wird, wenn die Dateigröße einen vorbestimmten Grenzwert nicht überschreitet.

6. Verfahren nach einem der Ansprüche 1 bis 5, wobei die ergänzte Task-Datei vom ersten Task-Computersystem (TS1) zumindest an ein zweites Task-Computersystem (TS2) weitergeleitet wird.

7. Verfahren nach Anspruch 6, umfassend die weiteren Schritte:
- Übertragen der ergänzten Task-Datei vom zweiten Task-Computersystem (TS2) auf ein zweites Quell-Computersystem (WS2), welches sich vom ersten Quell-Computersystem (WS1) unterscheidet,
- Weiteres Ergänzen der Task-Datei um weitere Informationen im zweiten Quell-Computersystem (WS2),
- Übertragen der weiter ergänzten Task-Datei vom zweiten Quell-Computersystem (WS2) zurück auf das zweite Task-Computersystem (TS2).

8. Computernetz-Infrastruktur zumindest umfassend:
- ein Quell-Computersystem (WS, WS1, WS2),
- ein Ziel-Computersystem (PS) und
- ein Task-Computersystem (TS1, TS2),
wobei das Quell-Computersystem (WS, WS1, WS2) eingerichtet ist, eine vorbereitete Task-Datei um vorbestimmte Informationen zu ergänzen und anschließend die ergänzte Task-Datei an das Task-Computersystem (TS1, TS2) zu übertragen, und wobei das Ziel-Computersystem (PS) eingerichtet ist, eine vom Task-Computersystem (TS1, TS2) an das Ziel-Computersystem (PS) übertragene ergänzte Task-Datei auf ihre Gültigkeit zu überprüfen und gegebenenfalls wenigstens einen Task im Ziel-Computersystem (PS) anhand der ergänzten Task-Datei auszuführen,
wobei das Quell-Computersystem (WS, WS1, WS2) und das Ziel-Computersystem (PS) jeweils eine Zugriffssteuereinheit aufweisen, die eingerichtet ist, zumindest vorübergehend vorbestimmte Netzwerk-Ports derart geschlossen zu halten, dass eine Ansprechbarkeit des Quell-Computersystems (WS, WS1, WS2) beziehungsweise des Ziel-Computersystems (PS) über ein Netzwerk zum Ablegen oder Abholen der Task-Datei verhindert ist,
wobei das Task-Computersystem (TS1, TS2) eine Zugriffssteuereinheit aufweist, die eingerichtet ist, wenigstens einen offenen Netzwerk-Port über Netzwerk derart ansprechbar zu halten, dass das Quell-Computersystem (WS, WS1, WS2) oder das Ziel-Computersystem (PS) auf das Task-Computersystem (TS1, TS2) zugreifen können, um die Task-Datei im Task-Computersystem (TS1, TS2) abzulegen oder vom Task-Computersystem (TS1, TS2) abzuholen,
wobei das Task-Computersystem (TS1, TS2) oder das Quell-Computersystem (WS, WS1, WS2) ferner eingerichtet sind, eine vorbestimmte Sequenz an Paket-Daten an das Ziel-Computersystem (PS) zu senden, welche in einer vorbestimmten Reihenfolge einen oder mehrere Netzwerk-Ports des Ziel-Computersystems (PS) anspricht, und das Ziel-Computersystem (PS) eingerichtet ist, die gesendeten Sequenz auf Übereinstimmung mit einer vordefinierten Sequenz im Ziel-Computersystem (PS) zu überprüfen und ein Übertragen der ergänzten Task-Datei zu veranlassen, falls die Überprüfung der gesendeten Sequenz positiv ist, wobei das Ziel-Computersystem (PS) ferner eingerichtet ist, hierzu eine Verbindung zum Task-Computersystem (TS1, TS2) aufzubauen und die ergänzte Task-Datei vom Task-Computersystem (TS1, TS2) abzuholen,
und wobei die Computernetz-Infrastruktur derart für eine bidirektionale Kommunikation zwischen Quell-Computersystem (WS, WS1, WS2) und Ziel-Computersystem (PS) eingerichtet ist, dass beide Computersysteme sowohl Quelle als auch Ziel sind.

9. Computernetz-Infrastruktur nach Anspruch 8, welche eingerichtet ist, ein Verfahren nach einem der Ansprüche 1 bis 7 durchzuführen.

## Claims

1. Method for communication between secured computer systems (WS, WS1, WS2, PS), comprising the steps:
- providing a prepared task file in a task computer system (TS1, TS2),
- transmitting the prepared task file from the task computer system (TS1, TS2) to a source computer system (WS, WS1, WS2),
- supplementing the prepared task file with specified information in the source computer system (WS, WS1, WS2),
- transmitting the supplemented task file from the source computer system (WS, WS1, WS2) to the task computer system (TS1, TS2),
- transmitting the supplemented task file from the task computer system (TS1, TS2) to a target computer system (PS),
- verifying the validity of the supplemented task file by the target computer system (PS),
- executing at least one task in the target computer system (PS) on the basis of the supplemented task file in the event that the verification of the validity of the supplemented task file was successful,
wherein both the source computer system (WS, WS1, WS2) and the target computer system (PS) at least temporarily keep specified network ports closed such that addressability of the source computer system (WS, WS1, WS2) or of the target computer system (PS) via a network for storing or fetching the task file is prevented, but the task computer system (TS1, TS2) is accessible with at least one listening open network port via network in such a way that the source computer system (WS, WS1, WS2) or the target computer system (PS) can access the task computer system (TS1, TS2) in order to store the task file in the task computer system (TS1, TS2) or fetch it from the task computer system (TS1, TS2),
and wherein the transmission of the supplemented task file from the task computer system (TS1, TS2) to the target computer system (PS) includes the following steps:
- sending a specified sequence of package data from the task computer system (TS1, TS2) or source computer system (WS, WS1, WS2) to the target computer system (PS), wherein the specified network ports of the target computer system (PS) are closed, and wherein the sequence addresses one or multiple network ports of the target computer system (PS) in a specified order,
- verifying the sent sequence for conformance with a predefined sequence in the target computer system (PS), as well as
- initiating the transmission of the supplemented task file by the target computer system (PS) in the case that the verification of the sent sequence has been positive,
wherein the target computer system (PS) establishes a connection to the task computer system (TS1, TS2) and fetches the supplemented task file from the task computer system (TS1, TS2).

2. Method according to claim 1, wherein local access to the source computer system (WS, WS1, WS2) is provided for a first user group, and local access to the target computer system (PS) is provided for a second user group, but local access to the respective other computer system of the respective user group is prevented.

3. Method according to one of claims 1 to 2, wherein the supplemented specified information comprises information of the source computer system (WS, WS1, WS2) as instruction-giver and/or information of the target computer system (PS) as instruction-recipient and/or a digital signature of the source computer system (WS, WS1, WS2) and/or confidential contents.

4. Method according to one of claims 1 to 3, wherein the supplemented specified information is at least partially encrypted.

5. Method according to one of claims 1 to 4, wherein prior to the transmission of the supplemented task file from the task computer system (TS1, TS2) to the target computer system (PS), the target computer system (PS) requests the file size of the task file, wherein the task file is transmitted to the target computer system (PS) only if the file size does not exceed a specified threshold.

6. Method according to one of claims 1 to 5, wherein the supplemented task file is forwarded from the first task computer system (TS1) at least to a second task computer system (TS2).

7. Method according to claim 6, comprising the further steps of:
- transmitting the supplemented task file from the second task computer system (TS2) to a second source computer system (WS2) different from the first source computer system (WS1),
- further supplementing the task file with further information in the second source computer system (WS2),
- transmitting the further supplemented task file from the second source computer system (WS2) back to the second task computer system (TS2).

8. Computer network infrastructure, comprising at least:
- a source computer system (WS, WS1, WS2),
- a target computer system (PS), and
- a task computer system (TS1, TS2),
wherein the source computer system (WS, WS1, WS2) is adapted to supplement a prepared task file with specified information and to transmit the supplemented task file subsequently to the task computer system (TS1, TS2), and wherein the target computer system (PS) is adapted to verify a supplemented task file transmitted from the task computer system (TS1, TS2) to the target computer system (PS) for validity, and to execute, if appropriate, at least one task in the target computer system (PS) based upon the supplemented task file,
wherein the source computer system (WS, WS1, WS2) and the target computer system (PS) each comprise an access control unit, which is adapted to close specified network ports at least temporarily such that addressability of the source computer system (WS, WS1, WS2) or of the target computer system (PS) via a network for storing and fetching the task file is prevented,
wherein the task computer system (TS1, TS2) comprises an access control unit, which is adapted to keep at least one open network port addressable via network in such a way that the source computer system (WS, WS1, WS2) or the target computer system (PS) can access the task computer system (TS1, TS2) in order to store the task file in the task computer system (TS1, TS2) or to fetch it from the task computer system (TS1, TS2),
wherein the task computer system (TS1, TS2) or the source computer system (WS, WS1, WS2) are further adapted to send a specified sequence of package data to the target computer system (PS), which addresses one or multiple network ports of the target computer system (PS) in a specified order, and the target computer system (PS) is adapted to verify conformance of the sent sequence with a predefined sequence in the target computer system (PS) and to initiate a transmission of the supplemented task file in the event that the verification of the sent sequence has been positive, wherein the target computer system (PS) is further adapted, to that end, to establish a connection to the task computer system (TS1, TS2) and to fetch the supplemented task file from the task computer system (TS1, TS2),
and wherein the computer network infrastructure is adapted for a bidirectional communication between source computer system (WS, WS1, WS2) and target computer system (PS) in such a way that both computer systems are both source and target.

9. Computer network infrastructure according to claim 8, which is adapted to perform a method according to one of claims 1 to 7.

## Revendications

1. Procédé de communication entre des systèmes informatiques (WS, WS1, WS2, PS) sécurisés, comprenant les étapes :
- fourniture d'un fichier de tâches préparé dans un système informatique de tâche (TS1, TS2),
- transmission du fichier de tâches préparé depuis le système informatique de tâche (TS1, TS2) vers un système informatique source (WS, WS1, WS2),
- ajout d'un complément d'informations prédéfinies à un fichier de tâche préparé dans un système informatique source (WS, WS1, WS2),
- transmission du fichier de tâches complété depuis le système informatique source (WS, WS1, WS2) vers le système informatique de tâche (TS1, TS2),
- transmission du fichier de tâche complété depuis le système informatique de tâche (TS1, TS2) vers un système informatique cible (PS),
- vérification de la validité du fichier de tâches complété par le système informatique cible (PS),
- exécution d'au moins une tâche dans le système informatique cible (PS) au moyen du fichier de tâches complété, si la vérification de la validité du fichier de tâches complété a réussi,
dans lequel le système informatique source (WS, WS1, WS2) tout comme le système informatique cible (PS) tiennent fermés, du moins provisoirement, des ports de réseau prédéterminés de sorte qu'une réactivité du système informatique source (WS, WS1, WS2) voire du système informatique cible (PS) via un réseau pour déposer ou pour récupérer le fichier de tâches est empêchée, mais que le système informatique de tâche (TS1, TS2) est accessible au moyen d'un port de réseau ouvert adressable par le réseau de sorte que le système informatique source (WS, WS1, WS2) ou le système informatique cible (PS) peut accéder au système informatique de tâche (TS1, TS2) de manière à déposer le fichier de tâches dans le système informatique de tâche (TS1, TS2) ou de le récupérer depuis le système informatique de tâche (TS1, TS2), et
dans lequel la transmission du fichier de tâches complété depuis le système informatique de tâche (TS1, TS2) vers le système informatique cible (PS) comprend les étapes suivantes :
- envoi d'une séquence prédéterminée de données de paquet depuis le système informatique de tâche (TS1, TS2) ou le système informatique source (WS, WS1, WS2) vers le système informatique cible (PS), les ports de réseau prédéterminés du système informatique cible (PS) étant fermés et la séquence activant dans un ordre prédéterminé un ou plusieurs ports de réseau du système informatique cible (PS),
- vérification, dans le système informatique cible (PS), de la conformité de la séquence envoyée avec une séquence prédéfinie, ainsi que
- déclenchement, par le biais du système informatique cible (PS), la transmission du fichier de tâches complété, si la vérification de la séquence envoyée est positive,
dans lequel le système informatique cible (PS) établit une connexion avec le système informatique de tâche (TS1, TS2) et récupère le fichier de tâches complété depuis le système informatique de tâche (TS1, TS2).

2. Procédé selon la revendication 1, dans lequel un accès local au système informatique source (WS, WS1, WS2) est configuré pour un premier groupe d'utilisateurs et un accès local au système informatique cible (PS) est configuré pour un deuxième groupe d'utilisateurs, un accès local du groupe d'utilisateurs respectif à l'autre système informatique respectif étant toutefois empêché.

3. Procédé selon l'une quelconque des revendications 1 ou 2, dans lequel les informations prédéterminées complétées comprennent des informations telles que du système informatique source (WS, WS1, WS2) en tant que donneur d'instructions et/ou telles que du système informatique cible (PS) en tant que destinataire d'instructions et/ou comprennent une signature numérique du système informatique source (WS, WS1, WS2) et/ou des contenus confidentiels.

4. Procédé selon l'une quelconque des revendications 1 à 3, dans lequel les informations prédéterminées complétées sont au moins en partie codées.

5. Procédé selon l'une quelconque des revendications 1 à 4, dans lequel la taille du fichier de tâches est demandée par le système informatique cible avant la transmission du fichier de tâches complété depuis le système informatique de tâche (TS1, TS2) vers le système informatique cible (PS), le fichier de tâches n'étant transmis vers le système informatique cible (PS) que lorsque la taille du fichier ne dépasse pas une valeur seuil prédéterminée.

6. Procédé selon l'une quelconque des revendications 1 à 5, dans lequel le fichier de tâches complété est transmis du premier système informatique de tâche (TS1) au moins à un deuxième système informatique de tâche (TS2).

7. Procédé selon la revendication 6, comprenant les étapes supplémentaires :
- transmission du fichier de tâches complété depuis le deuxième système informatique de tâche (TS2) vers un deuxième système informatique source (WS2), lequel est différent du premier système informatique source (WS1),
- ajout supplémentaire d'autres informations au fichier de tâches dans le deuxième système informatique source (WS2),
- retransmission du fichier de tâches supplémentaire ajouté depuis le deuxième système informatique source (WS2) vers le deuxième système informatique de tâche (TS2).

8. Infrastructure du réseau informatique comprenant au moins :
- un système informatique source (WS, WS1, WS2),
- un système informatique cible (PS) et
- un système informatique de tâche (TS1, TS2),
le système informatique source (WS, WS1, WS2) étant configuré de manière à compléter un fichier de tâches préparé avec des informations prédéterminées puis à transmettre le fichier de tâches complété vers le système informatique de tâche (TS1, TS2), et le système informatique cible (PS) étant configuré de manière à vérifier la validité d'un fichier de tâches complété et transmis depuis le système informatique de tâche (TS1, TS2) vers le système informatique cible (PS) et le cas échéant à exécuter au moins une tâche dans le système informatique cible (PS) au moyen du fichier de tâches complété, le système informatique source (WS, WS1, WS2) et le système informatique cible (PS) comportant respectivement une unité de contrôle d'accès qui est configurée de manière à tenir fermés, du moins provisoirement, des ports de réseau prédéterminés de sorte qu'une réactivité du système informatique source (WS, WS1, WS2) voire du système informatique cible (PS) pour déposer ou pour récupérer le fichier de tâches via un réseau est empêchée,
le système informatique de tâche (TS1, TS2) comprenant une unité de contrôle d'accès qui est configurée de manière à ce qu'au moins un port de réseau ouvert reste adressable de telle manière que le système informatique source (WS, WS1, WS2) ou le système informatique cible (PS) peut accéder au système informatique de tâche (TS1, TS2) pour déposer le fichier de tâches dans le système informatique de tâche (TS1, TS2) ou le récupérer depuis le système informatique de tâche (TS1, TS2),
le système informatique de tâche (TS1, TS2) ou le système informatique source (WS, WS1, WS2) étant également configurés de manière à envoyer une séquence prédéterminée de données de paquet au système informatique cible (PS), laquelle active, dans un ordre prédéterminé, au moins un port du réseau du système informatique cible (PS), et le système informatique cible (PS) étant configuré pour vérifier la conformité de la séquence envoyée avec une séquence prédéterminée dans le système informatique cible (PS) et déclencher la transmission du fichier de tâches complété si la vérification de la séquence envoyée est positive, le système informatique cible (PS) étant également configuré pour établir une connexion avec le système informatique de tâche (TS1, TS2) et pour récupérer le fichier de tâches complété depuis le système informatique de tâche (TS1, TS2),
et l'infrastructure du réseau informatique étant configurée pour une communication bidirectionnelle entre le système informatique source (WS, WS1, WS2) et le système informatique cible (PS) de telle manière que les deux systèmes informatiques sont tant la source que la cible.

9. Infrastructure du réseau informatique selon la revendication 8, laquelle est configurée pour exécuter un procédé selon l'une quelconque des revendications 1 à 7.
